# FASCICULE DE BREVET EUROPEEN

(11) **EP 3 939 115 B1**
(45) Date de publication et mention de la délivrance du brevet: **14.06.2023**
(21) Numéro de dépôt: 20737603.9
(22) Date de dépôt: 09.07.2020
(51) Int. Cl.: H01P 11/00

(54) **PROCÉDÉ DE FABRICATION D'UN DISPOSITIF À GUIDE D'ONDES PAR FABRICATION ADDITIVE ET ÉLECTRODÉPOSITION, ET PRODUIT SEMI-FINI**
VERFAHREN ZUR HERSTELLUNG EINER WELLENLEITERVORRICHTUNG DURCH GENERATIVE FERTIGUNG UND GALVANISIERUNG SOWIE HALBERZEUGNIS
METHOD FOR MANUFACTURING A WAVEGUIDE DEVICE BY ADDITIVE MANUFACTURING AND ELECTRODEPOSITION, AND SEMI-FINISHED PRODUCT

(30) Priorité: 11.07.2019 FR 1907839
(43) Date de publication de la demande: 19.01.2022
(73) Titulaire: SWISSto12 SA, 1020 Renens (CH)
(72) Inventeur: BILLOD, Mathieu, 74160 Présilly (FR)
(74) Mandataire: P&TS SA (AG, Ltd.)
(86) Numéro de dépôt international: PCT/IB2020/056471
(87) Numéro de publication internationale: WO 2021/005554

(56) Documents cités:
- FR-A1- 2 433 838
- JP-A- S4 910 827
- US-A1- 2012 084 968
- DAIGLE MAXIME ET AL: "Photoimageable Thick-Film Micro-Coaxial Line for DC-to-Millimeter-Wave Broadband Applications", IEEE TRANSACTIONS ON COMPONENTS, PACKAGING AND MANUFACTURING TECHNOLOGY, IEEE, USA, vol. 4, no. 1, 1 janvier 2014 (2014-01-01) , pages 117-122, XP011536225, ISSN: 2156-3950, DOI: 10.1109/TCPMT.2013.2265053 [extrait le 2013-12-31]

## Description

### Domaine technique

La présente invention concerne un procédé de fabrication additive de dispositif à guide d'onde et un guide d'onde fabriqué selon ce procédé.

### Etat de la technique

Les signaux radiofréquence (RF) peuvent se propager soit dans un espace, soit dans des dispositifs guide d'onde. Ces dispositifs guide d'onde sont utilisés pour canaliser les signaux RF ou pour les manipuler dans le domaine spatial ou fréquentiel.

La présente invention concerne en particulier les dispositifs RF passifs qui permettent de propager et de manipuler des signaux radiofréquence sans utiliser de composants électroniques actifs. Les dispositifs à guides d'onde passifs peuvent être répartis en trois catégories distinctes :
- Les dispositifs basés sur le guidage d'ondes à l'intérieur de canaux métalliques creux, couramment appelés guides d'ondes.
- Les dispositifs basés sur le guidage d'ondes à l'intérieur de substrats diélectriques.
- Les dispositifs basés sur le guidage d'ondes au moyen d'ondes de surface sur des substrats métalliques tels que des circuits imprimés PCB, des microstrips, etc.

La présente invention concerne en particulier la fabrication de dispositifs à guide d'onde selon la première catégorie ci-dessus, collectivement désignée par la suite comme dispositifs à guides d'ondes. Des exemples de tels dispositifs incluent des guides d'ondes en tant que tels, des filtres, des antennes, des polariseurs, des convertisseurs de mode, etc. Ils peuvent être utilisés pour le routage de signal, le filtrage fréquentiel, la séparation ou recombinaison de signaux, l'émission ou la réception de signaux dans ou depuis l'espace libre, etc. Les documents JPS4910827A et l'article "Photoimageable Thick-Film Micro-Coaxial Line for DC-to Millimeter wave broadband applications", Daigle Maxime et al., IEEE TRANSACTIONS ON COMPONENTS, PACKAGING AND MANUFACTURING TECHNOLOGY, IEEE, USA, vol. 4, no. 1, 1 janvier 2014 (2014-01-01), pages 117-122, décrivent des procédures pour la fabrication de dispositifs à guide d'onde.

Les guides d'ondes conventionnels sont constitués par des dispositifs creux, dont la forme et les proportions déterminent les caractéristiques de propagation pour une longueur d'onde donnée du signal électromagnétique. Les guides d'onde classiques utilisés pour les signaux radiofréquence ont des ouvertures internes de section rectangulaire ou circulaire. Ils permettent de propager des modes électromagnétiques correspondant à différentes distributions de champ électromagnétique le long de leur section.

Mis à part ces exemples d'ouvertures de guide d'ondes rectangulaires ou circulaires, d'autres formes d'ouverture ont été imaginées ou peuvent être imaginées dans le cadre de l'invention et qui permettent par exemple de maintenir un ou plusieurs mode(s) électromagnétique(s) à une fréquence de signal donnée afin de transmettre un signal électromagnétique, de le séparer en plusieurs polarisations, de le filtrer etc. La forme et la surface de la section peuvent en outre varier le long de la direction principale du dispositif à guide d'ondes.

La fabrication de guides d'ondes avec des sections complexes est difficile et coûteuse. Afin d'y remédier, la demande de brevet US2012/0084968 propose de réaliser des guides d'ondes par impression 3D. A cet effet, une âme en plastique non conducteur est imprimée par une méthode additive puis recouverte d'un placage métallique par immersion. Les surfaces internes du guide d'onde doivent en effet être conductrices électriquement pour opérer. L'utilisation d'une âme non conductrice permet d'une part de réduire le poids et le coût du dispositif, d'autre part de mettre en oeuvre des méthodes d'impression 3D adaptées aux polymères ou aux céramiques et permettant de produire des pièces de haute précision avec une faible rugosité de paroi. Les pièces décrites dans ce document ont des formes complexes et comprennent d'une part un canal pour la propagation de l'onde, et d'autre part des trous de fixation sur un pied du guide d'onde, afin de le fixer à un autre élément.

Différentes techniques peuvent être mises en oeuvre pour la déposition du revêtement métallique sur les faces internes et éventuellement externe de l'âme. Le problème est cependant complexe en raison de la taille réduite de l'ouverture, des formes complexes qu'il s'agit souvent de recouvrir, et de la nécessité de contrôler avec une grande précision les dimensions de l'ouverture et donc l'épaisseur du revêtement.

Pour cette raison, des méthodes de déposition chimiques, sans courant électrique, sont parfois utilisées. Elles mettent en oeuvre l'immersion de la pièce à plaquer successivement dans un ou plusieurs bains contenant des réactifs qui déclenchent des réactions chimiques aboutissant à la déposition du matériau métallique choisi, par exemple du cuivre, de l'or, de l'argent, du nickel, etc, sur la surface à recouvrir. La déposition chimique sans courant électrique est cependant relativement lente ; en outre l'efficacité et la dynamique de la déposition dépendent de nombreux facteurs, y compris notamment la concentration de réactifs et d'ions métalliques dans les différents bains à proximité des surfaces à recouvrir. Ces multiples paramètres rendent la déposition difficile à contrôler.

Afin d'améliorer la vitesse et la maîtrise de la déposition, des méthodes d'électrodéposition ont aussi été mises en oeuvre, basées sur l'utilisation d'un courant électrique entre une cathode sur la paroi à recouvrir et une anode immergée dans un liquide rempli d'ions métalliques. A titre d'exemple, Yiley Huang et al., dans « Layer-by-Layer stereolithography of three-dimensional antennas", présenté lors du « Antennas and propagation society symposium », 2005, IEEE Washington, DC, July 3-8 2005, vol. 1A, page 276, ISBN : 978-0-7803-8883-3, décrivent une méthode d'électrodéposition de métal sur un composant microonde réalisé par stéréolithographie.

Un autre procédé d'électrodéposition est décrit dans FR2433838A1

Dans le cas d'une déposition d'un revêtement par déposition, ou même lors d'une déposition chimique sans application de courant électrique, l'état de surface des parois de l'ouverture est souvent insuffisant en sorte que ces parois doivent être polies. Différents procédés ont été proposés dans ce but. L'électrodéposition au moyen d'un courant entre une anode dans l'ouverture de guide d'onde et les parois de guide s'avère particulièrement efficace.

L'anode utilisé pour l'électrodéposition ou l'électropolissage est le plus souvent réalisée sous la forme d'un câble électriquement conducteur à travers l'ouverture du guide d'onde. Le diamètre de ce câble doit être relativement important afin de permettre à des courants élevés de circuler sans échauffement excessif; le câble présente donc nécessairement une certaine rigidité. L'introduction d'un tel câble dans l'ouverture du guide d'onde est relativement aisée dans le cas d'un guide d'onde rectiligne, mais peut s'avérer complexe dans le cas d'un guide d'onde incurvé, ou lorsque l'ouverture se partage, notamment dans le cas d'un polariseur ou d'un élément de recombinaison par exemple. Il est en effet nécessaire de veiller à ce que l'anode ne touche pas les parois internes de l'ouverture pendant la déposition, afin d'éviter un court-circuit.

### Bref résumé de l'invention

Un but de la présente invention est de proposer un procédé de fabrication de dispositif à guide d'onde qui soit exempt des limitations ci-dessus.

Un autre but de l'invention est de proposer un dispositif à guide d'onde fabriqué selon ce procédé et qui soit exempt des limitations des dispositifs à guides d'onde ci-dessus.

Selon l'invention, ces buts sont atteints notamment au moyen d'un procédé de fabrication d'un dispositif à guide d'ondes comportant les étapes suivantes :
fabrication additive d'une âme munie d'une ouverture ;
fabrication additive d'au moins une portion d'anode au travers de ladite ouverture ;
ladite anode est retirée après l'électrodéposition ou l'électropolissage.

Cette anode est destinée par exemple à l'électrodéposition d'une couche métallique conductrice sur les parois de l'ouverture. Dans ce cas, le procédé comporte une étape d'immersion de l'âme dans un bain d'ions métallique, puis une étape d'électrodéposition de la couche métallique conductrice sur les parois de ladite ouverture, par application d'un courant électrique entre ladite anode et une cathode.

Alternativement, ou en addition, cette anode peut aussi être utillisée pour l'électropolissage des parois de l'ouverture.

La fabrication de l'anode par un procédé de fabrication additive permet d'éviter l'étape supplémentaire d'introduction d'une anode fabriquée séparément dans une ouverture du guide d'ondes.

Dans un mode de réalisation préférentiel, au moins la portion de l'anode qui traverse l'ouverture est réalisée en une seule pièce par fabrication additive.

Dans un mode de réalisation préférentiel, l'anode est réalisée en une seule pièce par fabrication additive.

L'anode peut être réalisée en même temps que l'âme du dispositif.

L'âme est formée d'un matériau électriquement conducteur, par exemple de métal.

L'âme et l'anode peuvent être formées d'un même matériau métallique et réalisées au cours d'une seule et même étape de fabrication additive. Ainsi la fabrication de l'âme ne nécessite pas d'équipement supplémentaire

Dans un mode de réalisation, l'âme est formée d'un matériau isolant et revêtue d'une couche conductrice servant de cathode pendant l'électrodéposition et/ou l'électropolissage. L'anode est réalisée au travers l'ouverture, par fabrication additive dans un matériau isolant.

Dans un mode de réalisation, le procédé peut comporter une étape de fabrication additive de portions détachable destinées à maintenir ladite anode dans l'ouverture au moins pendant la fabrication.

Dans un mode de réalisation, ces portions détachables lient l'anode vers plusieurs points des parois latérales de l'ouverture.

Ces portions détachables peuvent être détachées avant l'étape d'électrodéposition, notamment afin d'interrompre la connexion galvanique entre l'anode et l'ouverture.

L'anode peut être maintenue dans l'ouverture par des moyens de maintien provisoires après le détachage desdites portions détachables et pendant l'électrodéposition.

Dans un mode de réalisation, les portions détachables sont isolées électriquement de l'anode et/ou de la cathode, ou forment une isolation électrique entre l'anode et la cathode, et sont détachées après ladite étape d'électrodéposition. Ce mode de réalisation évite la nécessité de maintenir provisoirement l'anode après le retrait des portions détachables, mais impose la réalisation de portions détachables au moins partiellement dans un matériau isolant différent de celui de l'anode conductrice, ou alors de lier les portions détachables à des portions du guide d'onde qui sont isolantes électriquement.

L'anode est de préférence retirée après l'électrodéposition.

L'invention concerne également un produit semi-fini destiné à la fabrication d'un dispositif à guide d'onde, comportant :
une âme munie d'une ouverture ;
une anode au travers de ladite ouverture ;
des portions détachables destinées à maintenir provisoirement l'anode dans l'ouverture;
ladite âme, ladite anode et lesdites portions détachables étant toutes fabriquées par fabrication additive .

Dans une variante, les portions détachables comportent avantageusement des zones prédécoupées, par exemple des zones de moindre épaisseur ou diamètre, destinées à être cassées facilement en manipulant les portions détachables avec une main, une pince ou un instrument coupant.

L'invention concerne également un dispositif à guide d'onde obtenu par le procédé de l'invention et à partir du produit semi-fini ci-dessus.

Par dispositif à guide d'onde, on entend dans la présente demande tout dispositif comportant un canal creux délimité par des parois conductrices et destiné au guidage d'ondes électromagnétiques RF dans le canal, par exemple pour la transmission d'un signal électromagnétique à distance, le filtrage, la réception et l'émission dans l'éther (antennes), la conversion de mode, la séparation de signaux, la recombinaison de signaux, etc.

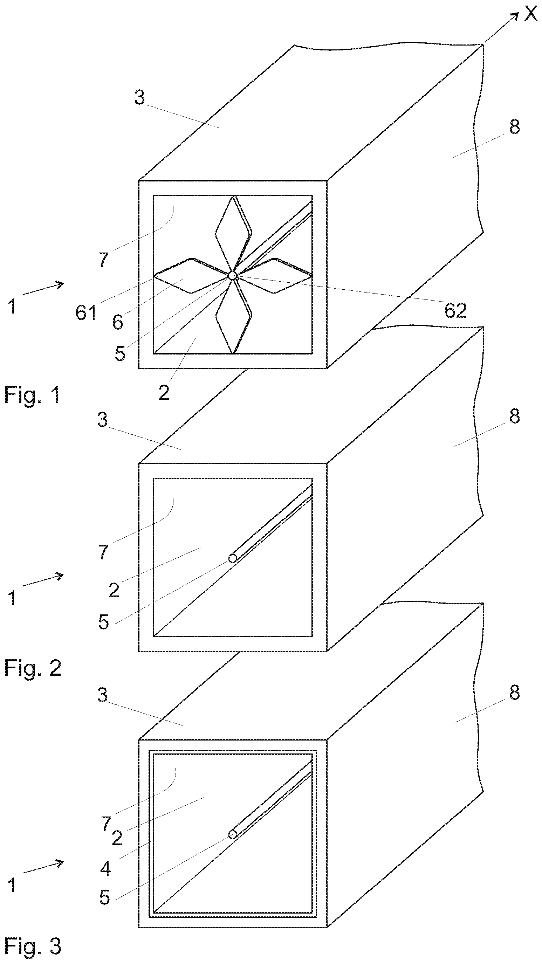

Daigle Maxime et al., "Photoimageable Thick-Film Micro-Coaxial Line for DC-to-Millimeter-Wave Broadband Applications", IEEE TRANSACTIONS ON COMPONENTS, PACKAGING AND MANUFACTURING TECHNOLOGY, IEEE, USA, vol. 4, no. 1, 1 janvier 2014 (2014-01-01), pages 117-122, XP011536225, ISSN: 2156-3950, DOi: 10.1109/TCPMT.2013.2265053 décrit un procédé de fabrication additive d'un guide d'onde comportant un conducteur interne illustré sur la figure 3 notamment. Il n'est cependant pas suggéré d'employer ce conducteur interne pour une étape d'électrodéposition ou d'électropolissage, ni de le maintenir au moyen de portions amovibles

L'invention concerne en particulier des dispositifs aptes à fonctionner dans les bandes de fréquence L, S, C, X, Ku, K, Ka, Q, V, W, F, D ou G.

L'expression « fabrication additive » décrit tout procédé de fabrication de pièces par ajout de matière, selon des données informatiques stockées sur un support informatique et définissant un modèle de la pièce. Outre la stéréolithographie, l'expression désigne aussi d'autres méthodes de fabrication par durcissement ou coagulation de liquide ou de poudre notamment, y compris sans limitation des méthodes basées sur des jets d'encre (binder jetting), DED (Direct Energy Déposition), EBFF (Electron beam freeform fabrication), FDM (fused déposition modeling), PFF (plastic freeforming), par aérosols, BPM (ballistic particle manufacturing), lit de poudre, SLS (Selective Laser Sintering), ALM (additive Layer Manufacturing), polyjet, EBM (electron beam melting), photopolymerisation, etc.

Le procédé peut comporter une étape de traitement de surface de l'âme afin de favoriser l'accrochage de la couche de métal conducteur. Le traitement de surface peut comporter une augmentation de la rugosité de surface, et/ou la déposition d'une couche intermédiaire d'accrochage.

### Brève description des figures

Des exemples de mise en oeuvre de l'invention sont indiqués dans la description illustrée par les figures annexées dans lesquelles :
- La figure 1 illustre une vue en perspective d'un produit semi fini comportant une âme non munie de son revêtement, une anode au travers de l'ouverture dans l'âme, et des portions de découpe pour maintenir l'anode dans l'ouverture au moins pendant la fabrication de l'anode.
- La figure 2 illustre une vue en perspective d'un produit semi fini comportant une âme non munie de son revêtement, une anode au travers de l'ouverture dans l'âme, après le retrait des portions de découpe.
- La figure 3 illustre une vue en perspective d'un dispositif à guide d'onde après la déposition d'une couche conductrice sur les parois de l'ouverture, et avant le retrait de l'anode.

### Exemple(s) de mode de réalisation de l'invention

Le dispositif à guide d'onde 1 des différents modes de réalisation décrits ou revendiqués, par exemple celui de la figure 3, comporte une âme 3, par exemple une âme en métal (aluminium, titane ou acier), ou en polymère, en époxy, en céramique, ou en matériau organique. L'âme est de préférence réalisée dans un matériau électriquement conducteur.

L'âme 3 est fabriquée par fabrication additive, de préférence par stéréolithographie, par fusion laser sélective (« selective laser melting ») ou par « selective laser sintering » (SLS) afin de réduire la rugosité de la surface. Le matériau de l'âme peut être non conducteur ou conducteur. L'épaisseur des parois de l'âme est par exemple entre 0,5 et 3 mm, de préférence entre 0,8 et 1,5mm.

La forme de l'âme peut être déterminée par un fichier informatique stocké dans un support de données informatique.

L'âme peut aussi être constituée de plusieurs parties formées par impression 3D et assemblées entre elles avant le plaquage, par exemple par collage ou fusion thermique ou assemblage mécanique.

Cette âme 3 délimite une ouverture interne 2 formant un canal destiné au guidage d'ondes. L'âme 3 présente par conséquent une surface interne 7 et une surface externe 8, la surface interne 7 recouvrant les parois de l'ouverture de section rectangulaire 2.

La section transversale de l'ouverture 2 peut être rectangulaire, comme représenté sur les figures. L'invention n'est cependant pas limitée à des dispositifs à guide d'onde de section circulaire et l'invention peut aussi s'appliquer à des dispositifs avec des sections quelconques, y compris des sections ovales, elliptiques, rectangulaires avec des coins arrondis, circulaires, etc. La forme de cette section transversale peut en outre varier le long de l'ouverture.

L'ouverture à travers le guide d'onde peut en outre être munie d'une ou plusieurs stries.

La section de l'ouverture peut être de surface variable. Par exemple, l'ouverture peut être évasée dans le cas d'un guide d'onde servant d'antenne.

L'axe longitudinal de l'ouverture à travers le dispositif à guide d'onde peut être rectiligne, comme sur les exemples représentés, ou incurvée.

L'ouverture à travers le guide d'onde peut comporter un septum non représenté afin d'agir comme polariseur afin de séparer les deux polarités orthogonales d'un signal. La hauteur du septum peut être variable, par exemple avec des marches en escalier.

Au moins une extrémité du guide d'onde peut comporter une ou plusieurs flanges non représentées afin de le connecter à un autre dispositif à guide d'onde ou à un équipement.

Le guide d'onde est par exemple destiné à être utilisé dans un satellite pour relier un équipement de communication, par exemple un émetteur ou récepteur radiofréquence, à une antenne ou un réseau d'antenne. Une extrémité du guide d'onde peut être conformée en antenne.

La forme et les proportions de la section de ce canal sont déterminées en fonction de la fréquence du signal électromagnétique à transmettre ou à transformer.

La figure 1 illustre un exemple de produit semi-fini 1 après l'opération de fabrication additive, par exemple par stéréolithographie. A noter que cette fabrication est de préférence réalisée par couches successives parallèles à la section transversale du dispositif, donc en disposant l'axe longitudinal x verticalement, de manière à minimiser le risque d'affaissement de portions en porte-à-faux lors de l'impression. Dans le cas d'un dispositif avec un axe longitudinal non rectiligne, l'impression est de préférence réalisée selon une direction qui minimise les problèmes de porte-à-faux lors de la fabrication.

L'ouverture 2 à travers le dispositif 1 de la figure 1 est munie d'une anode 5 électriquement conductrice qui est également réalisée par fabrication additive. Cette anode peut être utilisée pour l'électrodéposition de couches sur les parois de l'ouverture et/ou pour l'électropolissage de ces parois.

L'anode 5 est de préférence réalisée dans le même matériau que l'âme 3 du dispositif, par exemple en métal. Dans un mode de réalisation préférentiel, l'anode 3 est réalisée avec la même machine d'impression 3d et la même tête d'impression que l'âme 3, ce qui évite de devoir recourir à plusieurs machines d'impression 3D différentes ou à des machines munies de plusieurs têtes pour l'âme et l'anode. Il est cependant possible de réaliser l'anode et l'âme dans des matériaux différents ou avec des têtes ou des machines d'impression distinctes, notamment lorsque l'âme est réalisée dans un matériau isolant.

L'anode est maintenue dans l'ouverture 2 au moyen de portions 6, de préférence des portions détachables qui relient des points 62 de l'anode à un ou plusieurs points 61 sur les parois de l'ouverture 2, par exemple à une ou plusieurs parois internes 7.

Dans une option, les portions détachables comportent avantageusement des zones prédécoupées, par exemple des zones de moindre épaisseur ou diamètre par rapport au reste des portions 6, et destinées à être cassées facilement en manipulant les portions détachables avec une main, une pince ou un instrument coupant.

Dans l'exemple illustré, l'anode 5 est reliée par quatre portions détachables 6 à quatre points 61 de l'ouverture interne, ce qui permet de la positionner à distance des quatre parois, de préférence à équidistance. Dans un mode de réalisation préférentiel, différents points 62 de l'anode 5, à différentes distances le long de cette anode, sont reliés par des portions détachables à une ou plusieurs paris 7 de l'ouverture 2. Cela permet de garantir un positionnement précis de l'anode 5 dans l'ouverture 2 sur toute sa longueur. Dans un mode de réalisation, chacun des deux extrémités de l'ouverture 2 est reliée à l'anode 5 par une ou plusieurs portions détachables 6 ; en les plaçant à proximité des extrémités de l'ouverture 2, le détachage des portions 6 est facilité.

Les portions détachables 6 sont de préférence réalisées dans le même matériau électriquement conducteur que l'anode 5 et/ou que l'âme 3.

Ces portions détachables 6 sont ensuite détachées en cassant les points d'attache 61 aux parois 7 et/ou les points d'attache 62 à l'anode, ce qui permet d'isoler galvaniquement l'anode 5 des parois 7 de l'ouverture 2 comme illustré sur la figure 2. Les portions peuvent être cassées par exemple en exerçant une force de torsion ou de traction directement sur ces portions, ou en exerçant une force de traction sur l'anode 5, ce qui permet par exemple de casser les zones prédécoupées.

L'anode peut être maintenue après le détachage des portions 6 et pendant l'électrodéposition ou l'électropolissage grâce à des moyens de maintien temporaires non illustrés, par exemple un posage ou une pince à l'une ou aux différentes extrémités du dispositif 1, etc.

Dans un mode de réalisation, les parois de l'âme sont ensuite revêtues d'une couche conductrice, par déposition chimique ou par électrodéposition. Après immersion, un courant est ensuite appliqué entre l'anode et cette couche conductrice fonctionnant en cathode, afin d'obtenir un électropolissage de la couche conductrice.

Dans un autre mode de réalisation, le dispositif 1 avec l'anode 5 sont ensuite immergés dans un bain contenant des ions métalliques, et la surface interne 7 de l'âme 3 est recouverte par électrodéposition d'une couche métallique 4 conductrice, par exemple de cuivre, d'argent, d'or, de nickel etc., plaquée par déposition chimique avec application d'un courant électrique au travers de l'anode et des parois 7 de l'ouverture formant cathode. Un revêtement conducteur (non illustré) servant de cathode peut être déposé préalablement sur ces parois, par exemple par déposition chimique sans courant, notamment lorsque l'âme 3 est non conductrice. Ce revêtement peut aussi servir de couche de lissage.

L'épaisseur de la couche 4 est par exemple comprise entre 1 et 20 micromètres, par exemple entre 4 et 10 micromètres. Le revêtement peut aussi être un assemblage de couches et comporter par exemple une couche de lissage directement sur l'âme, une ou plusieurs couches d'accrochage, etc.

L'épaisseur du revêtement conducteur 4 doit être suffisante pour que la surface de l'ouverture 2 soit conductrice électriquement à la fréquence radio choisie. Ceci est typiquement obtenu à l'aide d'une couche conductrice dont l'épaisseur est égale ou supérieure à la profondeur de peau δ.

La surface externe 8 du canal est de préférence également recouverte d'une couche métallique qui permet notamment de rigidifier le dispositif, et de lui donner la solidité requise.

Dans un autre mode de réalisation, au moins certaines des portions détachables 6 sont réalisées de telle sorte à éviter la création d'un pont galvanique entre l'anode 5 et la cathode. A cet effet, les portions détachables peuvent être réalisées au moins partiellement dans un matériau isolant, ou alors être rattachées à une portion de l'âme 3 elle-même isolante. Dans ce mode de réalisation, les portions détachables peuvent être maintenues pendant l'étape d'électrodéposition, et retirées seulement après cette étape. On évite ainsi la nécessité de devoir maintenir l'anode avec des moyens de maintien temporaire pendant l'électrodéposition.

## Revendications

1. Procédé de fabrication d'un dispositif à guide d'ondes (1) comportant les étapes suivantes :
fabrication additive d'une âme (3) munie d'une ouverture (2) ;
fabrication additive d'au moins une portion d'une anode (5) au travers de ladite ouverture ;
application d'un courant électrique entre ladite anode et une cathode, afin d'effectuer une déposition d'une couche métallique conductrice sur ladite âme et/ou un électropolissage des parois de ladite ouverture , et
ladite anode étant retirée après l'électrodéposition ou l'électropolissage.

2. Procédé selon la revendication 1, ladite déposition étant effectuée par immersion de l'âme dans un bain d'ions métallique, puis électrodéposition de la couche métallique conductrice (4) sur les parois (7) de ladite ouverture, par application du courant électrique entre ladite anode et la cathode.

3. Procédé selon l'une des revendications 1 ou 2, comportant une dite étape d'électropolissage par application du courant électrique entre ladite anode et la cathode.

4. Procédé selon l'une des revendications 1 à 3, ladite âme (5) étant formée d'un matériau électrique conducteur.

5. Procédé selon la revendication 4, ladite âme (3) et ladite anode (5) étant formées d'un même matériau métallique et réalisées au cours d'une seule et même étape de fabrication additive.

6. Procédé selon l'une des revendications 1 à 3, ladite âme (3) étant formée d'un matériau isolant et revêtue d'une couche conductrice servant de dite cathode pendant l'électrodéposition.

7. Procédé selon l'une des revendications précédentes, comprenant la fabrication additive de portions détachables (6) destinées à maintenir ladite anode (5) dans l'ouverture (2) au moins pendant la fabrication de l'âme.

8. Procédé selon la revendication 7, lesdites portions détachables (6) étant détachées avant ladite étape d'électrodéposition.

9. Procédé selon la revendication 8, ladite anode (5) étant maintenue par des moyens de maintien provisoires après le détachage desdites portions détachables et pendant l'électrodéposition.

10. Procédé selon la revendication 7, lesdites portions détachables (6) étant isolées électriquement de l'anode (5) et/ou de la cathode (3), ou formant une isolation électrique entre l'anode et la cathode, et étant détachées après ladite étape d'électrodéposition ou d'électropolissage.

11. Produit semi-fini (1) destiné à la fabrication d'un dispositif à guide d'onde, comportant :
une âme (3) munie d'une ouverture (2) ;
une anode (5) au travers de ladite ouverture ;
des portions détachables (6) destinées à maintenir provisoirement l'anode (5) dans l'ouverture (2);
ladite âme (3), ladite anode (5) et lesdites portions détachables étant toutes fabriquées par fabrication additive .

12. Produit selon la revendication 11, ladite âme (3) étant formée d'un matériau électrique conducteur.

13. Produit selon la revendication 12, ladite âme (3) et ladite anode (5) étant formées d'un même matériau métallique.

14. Produit selon la revendication 11, ladite âme (3) étant formée d'un matériau isolant et revêtue d'une couche conductrice.

15. Produit selon l'une des revendications 11 à 14, lesdites portions détachables comportent des zones prédécoupées.

## Patentansprüche

1. Verfahren zur Herstellung einer Hohlleitervorrichtung (1) umfassend folgende Schritte:
Additives Herstellen eines Kerns (3) mit einer Öffnung (2);
Additives Herstellen mindestens eines Teils einer Anode (5) durch die Öffnung;
Anlegen eines elektrischen Stroms zwischen der Anode und einer Kathode, um eine Abscheidung einer leitenden Metallschicht auf dem Kern und/oder ein Elektropolieren der Wände der Öffnung zu bewirken, und wobei die Anode nach der Elektroabscheidung oder dem Elektropolieren entfernt wird.

2. Verfahren nach Anspruch 1, wobei die Abscheidung durch Eintauchen des Kerns in ein Metallionenbad und anschließende elektrolytische Abscheidung der leitenden Metallschicht (4) auf den Wänden (7) der Öffnung durch Anlegen des elektrischen Stroms zwischen der Anode und der Kathode durchgeführt wird.

3. Verfahren nach einem der Ansprüche 1 oder 2, mit einem Elektropolierschritt durch Anlegen von elektrischem Strom zwischen der Anode und der Kathode.

4. Verfahren nach einem der Ansprüche 1 bis 3, wobei der Kern (5) aus einem elektrisch leitenden Material gebildet ist.

5. Verfahren nach Anspruch 4, wobei der Kern (3) und die Anode (5) aus demselben metallischen Material gebildet und in ein und demselben additiven Herstellungsschritt hergestellt werden.

6. Verfahren nach einem der Ansprüche 1 bis 3, wobei der Kern (3) aus einem isolierenden Material gebildet wird und mit einer leitenden Schicht beschichtet ist, die während der Elektroabscheidung als Kathode dient.

7. Verfahren nach einem der vorhergehenden Ansprüche, umfassend das additive Herstellen von lösbaren Abschnitten (6), um die Anode (5) zumindest während der Herstellung des Kerns in der Öffnung (2) zu halten.

8. Verfahren nach Anspruch 7, wobei die lösbaren Abschnitte (6) vor dem Schritt des Galvanisierens abgetrennt werden.

9. Verfahren nach Anspruch 8, wobei die Anode (5) nach dem Abtrennen der lösbaren Abschnitte und während der Galvanisierung durch provisorische Haltemittel gehalten wird.

10. Verfahren nach Anspruch 7, wobei die lösbaren Abschnitte (6) elektrisch von der Anode (5) und/oder der Kathode (3) isoliert sind oder eine elektrische Isolierung zwischen der Anode und der Kathode bilden und nach dem Schritt des Galvanisierens oder Elektropolierens abgetrennt werden.

11. Halbfertigprodukt (1) für die Herstellung einer Hohlleitervorrichtung, umfassend:
ein Kern (3), der mit einer Öffnung (2) versehen ist;
eine sich durch die Öffnung sich erstreckende Anode (5);
lösbare Abschnitte (6) zum vorübergehenden Halten der Anode (5) in der Öffnung (2);
wobei der Kern (3), die Anode (5) und die lösbaren Abschnitte alle durch additive Fertigung hergestellt sind.

12. Produkt nach Anspruch 11, wobei der Kern (3) aus einem elektrisch leitfähigen Material gebildet ist.

13. Produkt nach Anspruch 12, wobei der Kern (3) und die Anode (5) aus demselben metallischen Material gefertigt sind.

14. Produkt nach Anspruch 11, wobei der Kern (3) aus einem isolierenden Material gebildet und mit einer leitenden Schicht überzogen ist.

15. Produkt nach einem der Ansprüche 11 bis 14, wobei die lösbaren Abschnitte vorgestanzte Bereiche umfassen.

## Claims

1. Method for manufacturing a waveguide device (1) comprising the following steps:
additive manufacturing of a core (3) provided with an opening (2);
additive manufacturing of at least one portion of an anode (5) through said opening;
application of an electric current between said anode and a cathode, in order to carry out a deposition of a conductive metal layer on said core and/or an electropolishing of the walls of said opening, and
said anode being removed after electrodeposition or electropolishing.

2. The method of claim 1, said deposition being carried out by immersing the core in a metal ion bath and then electrodepositing the conductive metal layer (4) on the walls (7) of said opening by applying electric current between said anode and cathode.

3. The method of claim 1 or 2, comprising a said electropolishing step by applying electric current between said anode and cathode.

4. The method of any one of claims 1 to 3, said core (5) being formed of an electrically conductive material.

5. The method of claim 4, said core (3) and said anode (5) being formed of a same metallic material and made in a single and same additive manufacturing step.

6. The method of any one of claims 1 to 3, said core (3) being formed of an insulating material and coated with a conductive layer serving as said cathode during electrodeposition.

7. The method of any one of the preceding claims, comprising the additive manufacturing of detachable portions (6) for holding said anode (5) in the opening (2) at least during the manufacturing of the core.

8. The method of claim 7, said detachable portions (6) being detached prior to said electrodeposition step.

9. The method of claim 8, said anode (5) being held by temporary holding means after detachment of said detachable portions and during electrodeposition.

10. The method of claim 7, said detachable portions (6) being electrically insulated from the anode (5) and/or from the cathode (3), or forming an electrical insulation between the anode and the cathode, and being detached after said electrodeposition or electropolishing step.

11. Semi-finished product (1) for the manufacture of a waveguide device, comprising:
a core (3) provided with an opening (2);
an anode (5) through said opening;
detachable portions (6) for temporarily holding the anode (5) in the opening (2);
said core (3), said anode (5) and said detachable portions being all manufactured by additive manufacturing.

12. The product of claim 11, said core (3) being formed of an electrically conductive material.

13. The product of claim 12, said core (3) and said anode (5) being formed of a same metallic material.

14. The product of claim 11, said core (3) being formed of an insulating material and coated with a conductive layer.

15. The product of any one of claims 11 to 14, said detachable portions include pre-cut areas.
